# EUROPÄISCHE PATENTSCHRIFT

(11) **EP 0 924 865 B1**
(45) Veröffentlichungstag und Bekanntmachung des Hinweises auf die Patenterteilung: **08.06.2005**
(21) Anmeldenummer: 98204255.8
(22) Anmeldetag: 15.12.1998
(51) Int. Cl.: H04B 1/04, H03H 7/38

(54) **Antenneninpedanzanpassung eines Mobilfunkgerätes**
Antenne impedance transformer for a mobile radio transceiver
Transformateur d'impedance d'antenne pour un radioémetteur-récepteur mobile

(30) Priorität: 20.12.1997 DE 19757142
(43) Veröffentlichungstag der Anmeldung: 23.06.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Birth, Winfrid, Dipl.-Ing., Röntgenstrasse 24, 22335 Hamburg (DE); Burdenski, Ralf, Dr.-Ing., Röntgenstrasse 24, 22335 Hamburg (DE); Wünsch, Christian, Dr.-Ing., Röntgenstrasse 24, 22335 Hamburg (DE)
(74) Vertreter: Volmer, Georg, Dipl.-Ing.

(56) Entgegenhaltungen:
- DE-A- 4 222 190
- US-A- 4 951 012
- PATENT ABSTRACTS OF JAPAN vol. 006, no. 136 (E-120), 23. Juli 1982 (1982-07-23) & JP 57 060739 A (NIPPON TELEGR & TELEPH CORP ;OTHERS: 01), 12. April 1982 (1982-04-12)
- MCCLURE D A: "BROADBAND TRANSMISSION LINE TRANSFORMER FAMILY MATCHES A WIDE RANGE OF IMPEDANCES" RF DESIGN, CARDIFF PUBLISHING CO, ENGLEWOOD,CO, US, Bd. 17, Nr. 2, 1. Februar 1994 (1994-02-01), Seiten 62,64-66, XP000429252 ISSN: 0163-321X

## Beschreibung

Die Erfindung betrifft ein Mobilfunkgerät mit wenigstens einer Senderendstufe, mit wenigstens einer Antenne und mit wenigstens einem zwischen Senderendstufe und Antenne angeordneten Impedanzanpassungsnetzwerk mit einem Transformationsfaktor zur Anpassung einer Senderlastimpedanz an eine Antenneneingangsimpedanz.

Weiterhin bezieht sich die Erfindung noch auf einen Sender mit wenigstens einer Senderendstufe, mit wenigstens einer Antenne und mit wenigstens einem zwischen Senderendstufe und Antenne angeordneten Impedanzanpassungsnetzwerk mit einem Transformationsfaktor zur Anpassung einer Senderlastimpedanz an eine Antenneneingangsimpedanz.

Aus der Offenlegungsschrift DE 42 22 190 A1 ist ein solches Funkgerät mit einer Antennenumschaltvorrichtung für wechselseitigen Sende- und Empfangsbetrieb bekannt. Dabei ist zur Anpassung ein λ/4-Wellenleiter zwischen Senderendstufe (31) und Antenne (1) angeordnet. Dadurch können die speziellen Transformationseigenschaften für den Anfangs- und Endwiderstand Z_{A} bzw. Z_{E} des λ/4-Wellenleiters ausgenutzt werden. Der Endwiderstand Z_{E} eines λ/4-Wellenleiters wird auf den Eingang des λ/4-Wellenleiters in Abhängigkeit seines Wellenwiderstandes Z transformiert. Der Wellenwiderstand Z läßt sich mittels der Parameter des wellenführenden Bereichs, wie geometrische Abmessungen und Materialkonstanten (ε, µ), für die zu führende Wellenlänge λ einstellen. Die Widerstandstransformation erfolgt allgemein nach der Beziehung Z_{A} = Z²/ Z_{E}. Der mit der Senderendstufe (31) verbundene λ/4-Wellenleiter (32) transformiert im sendenden Zustand die Antennenimpedanz auf die Erfordernisse der Senderendstufe (31). Auf diese Weise wird im sendenden Zustand die Senderendstufe (31) an die Antenne (1) angepaßt und die Ausgangsleistung der Senderendstufe (31) voll zur Antenne (1) weitergegeben.

Durch o.a. Veränderungsmöglichkeiten des Wellenwiderstandes Z kann ein geeigneter Transformationsfaktor eingestellt werden. Der zweite λ/4-Wellenleiter (33) kann für die Widerstandtransformation vernachlässigt werden, wenn sein Wellenwiderstand gleich dem Antennenwiderstand eingestellt wird (s. o. Transformationsgleichung).

Die Lastimpedanz eines Leistungsverstärkers in einer Senderendstufe wird an den Eingang einer Antenne angepaßt, um einen möglichst hohen Wirkungsgrad (Verhältnis der Leistung, die an die Antenne abgegeben wird zur aufgewendeten Gesamtleistung) der Senderendstufe zu erzielen. Eine Anpassung mittels einem λ/4-Wellenleiter gemäß dem Stand der Technik erreicht jedoch jeweils nur für einen Betriebszustand mit einer bestimmten Ausgangsleistung P_{A} und Versorgungsspannung U_{B} des Leistungsverstärkers einen guten Wirkungsgrad (fester Transformationsfaktor). Bei Mobilfunkgeräten, z. B. für Mobilfunk nach dem GSM-Standard, sind jedoch verschiedene Pegel für die Ausgangsleistung festgelegt, die abhängig von den Übertragungseigenschaften mittels einer Leistungsregelung exakt eingestellt werden müssen. Außerdem verändert sich noch die Versorgungsspannung U_{B} entsprechend einer Entladungskurve für die verwendete Batterie. Daher sinkt gegenüber dem angepaßten Betriebszustand beispielsweise bei erhöhter Versorgungsspannung U_{B} und konstant geregelter Ausgangsleistung P_{A} der Wirkungsgrad, weil die Spannung U_{A} am Ausgang der Senderendstufe konstant bleibt. Damit bleibt auch der Strom I_{A} am Ausgang auf dem geregelten konstanten Wert, so daß der Wirkungsgrad stark reduziert ist. Insgesamt wird häufig nur ein reduzierter Wirkungsgrad der Senderendstufe erreicht. Das ist insbesondere bei batteriebetriebenen Mobilfunkgeräten aufgrund der infolgedessen verkürzten Nutzungsdauer ein wesentlicher Nachteil.

Die Aufgabe der Erfindung ist es daher, ein Mobilfunkgerät mit einem verbesserten Wirkungsgrad der Senderendstufe bei unterschiedlichen Betriebszuständen zu schaffen.

Die Aufgabe wird dadurch gelöst, daß im Impedanzanpassungsnetzwerk wenigstens zwei Impedanztransformatoren durch wahlweise Parallelschaltung zur Bildung von wenigstens zwei Transformationsfaktoren vorgesehen sind. Auf diese Weise können wenigstens zwei unterschiedliche Lastimpedanzen für die Senderendstufe eingestellt werden, wobei durch geeignete Verschaltung sind auch mehr Transformationsfaktoren denkbar sind. Die Anordnung im Impedanzanpassungsnetzwerk kann sehr flexibel gemäß den Anforderungen, insbesondere mittels Software-gesteuerter Schalter, angepaßt werden, ohne Änderungen an der Hardware vornehmen zu müssen. Damit kann ein guter Wirkungsgrad der Senderendstufe bei unterschiedlichen Betriebszuständen erreicht werden, da die Senderendstufe jeweils eine Lastimpedanz besitzt, bei der die für die eingestellte Sendeleistung höchst mögliche Spannungsamplitude entsteht.

Bevorzugte Ausführungsform der Erfindung ist eine Bildung der Impedanztransformatoren durch wenigstens zwei λ/4-Wellenleiter. Die λ/4-Wellenleiter können als Koaxialleiter oder als Streifenleiter ausgeführt werden. Ebenfalls kann eine Nachbildung eines λ/4-Wellenleiters mittels einem LC-Netzwerk verwendet werden, das die entsprechenden Übertragungseigenschaften besitzt.

In einer vorteilhaften Weiterbildung ist im Impedanzanpassungsnetzwerk ein erster λ/4-Wellenleiter einerseits zur Kopplung mit dem Ausgang der Senderendstufe und andererseits mit dem Eingang der Antenne und ein zweiter λ/4-Wellenleiter einerseits zur Kopplung mit dem Ausgang der Senderendstufe und andererseits mit wenigstens einem Schalter, der in einer ersten Schalterstellung die Verbindung mit einem Masseanschluß und in einer zweiten Schalterstellung mit dem Eingang der Antenne herstellt, vorgesehen. Dabei kann zur Bildung des Schalters ein mit PIN-Dioden realisierter Hochfrequenzschalter oder ein bistabiles mechanisches Relais vorgesehen werden. Bei einer solchen Anordnung kann die Steuerung der Schalter von einer Software übernommen werden, so daß eine schnelle und flexibele Steuerung des Impedanzanpassungsnetzwerk möglich ist. Weiterhin wird durch eine antennenseitige Anordnung des Schalters vermieden, daß im Schalter große Verluste entstehen. Da diese Seite hochohmig ist, fließt dort im Vergleich zum maximalen Sendestrom an der Senderendstufe nur ein geringer Strom.

Weiterhin wird die Aufgabe der Erfindung noch durch einen Sender gelöst, bei dem im Impedanzanpassungsnetzwerk wenigstens zwei Impedanztransformatoren durch wahlweise Parallelschaltung zur Bildung von wenigstens zwei Transformationsfaktoren vorgesehen sind.

Im Anschluß wird ein Ausführungsbeispiel der Erfindung anhand von Zeichnungen näher beschrieben. Es zeigen
- Figur 1:: ein Blockdiagramm der Funktionsblöcke eines Mobilfunkgerätes,
- Figur 2:: eine schematische Darstellung eines Teiles des Sendezweiges des Mobilfunkgerätes,
- Figur 3:: ein detailliertere Darstellung eines Impedanzanpassungsnetzwerkes zwischen einer Senderendstufe und einer Antenne.

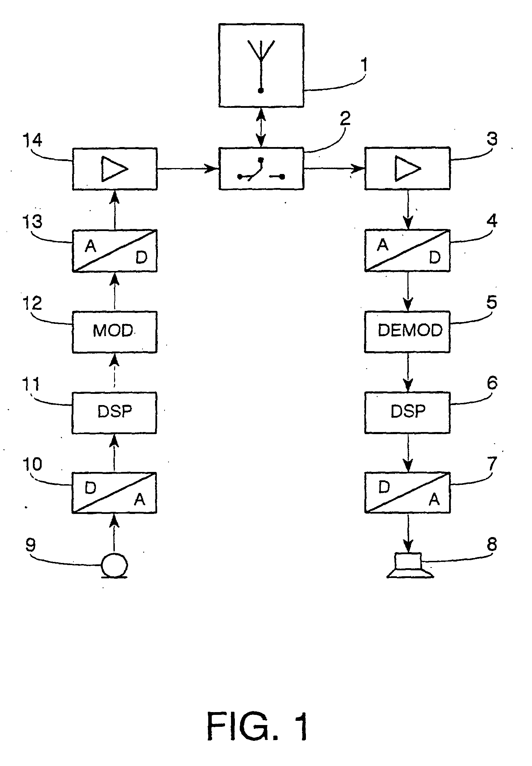

Die Figur 1 zeigt in einem Blockdiagramm die Funktionsblöcke eines Sende- und eines Empfangszweiges eines Mobilfunkgerätes, wie es beispielsweise einem Mobiltelefon nach dem GSM-Standard entspricht. Eine Antenne 1 ist mit einem Antennenumschalter 2 gekoppelt, der in einem Empfangs- bzw. Sendebetrieb den Empfangs- bzw. Sendezweig mit der Antenne 1 verbindet. Im Empfangsbetrieb gelangen die analogen Funksignale über eine Empfangsschaltung 3 zu einem A/D-Umsetzer 4. Die erzeugten digitalen Signale werden in einem Demodulator 5 demoduliert und anschließend einem digitalen Signalprozessor (DSP) 6 zugeführt. Im DSP 6 werden nacheinander die nicht im einzelnen dargestellten Funktionen Entzerrung, Entschlüsselung, Kanaldekodierung und Sprachdekodierung durchgeführt. Mit einem D/A-Umsetzer 7 werden analoge Signale erzeugt, die über einen Lautsprecher 8 ausgegeben werden.

Im Sendebetrieb werden die von einem Mikrofon 9 aufgenommenen analogen Sprachsignale mit einem A/D-Umsetzer 10 umgewandelt und dann einem DSP 11 zugeführt. Der DSP 11 führt die dem Empfangsbetrieb komplementären Funktionen Sprachkodierung, Kanalkodierung und Verschlüsselung durch, wobei alle Funktionen von einem einzigen DSP ausgeführt werden. Die binär kodierten Datenworte werden in einem Modulator 12 GMSK moduliert und dann in einem D/A-Umsetzer 13 in analoge Funksignale umgewandelt. Eine Senderendstufe 14 mit einem Leistungverstärker erzeugt das über die Antenne 1 zu sendende Funksignal.

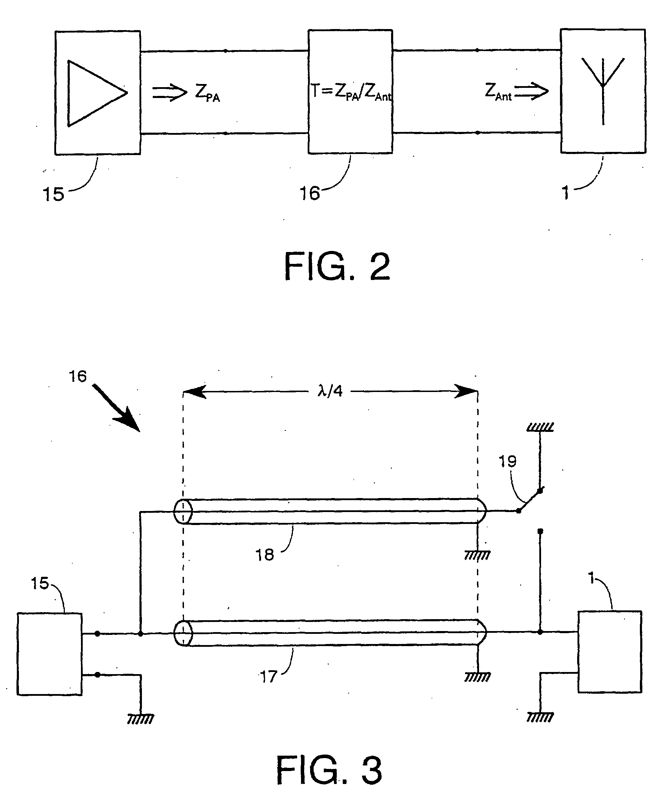

In der weiteren Beschreibung zu Figur 2 wird von der Senderendstufe 14 nur noch der Leistungsverstärker 15 betrachtet. Der Leistungsverstärker 15 ist über ein Impedanzanpassungsnetzwerk 16 mit einem Transformationsfaktor T mit der Antenne 1 verbunden. Die Antenne 1 besitzt einen Eingangswiderstand Z_{Ant}, der einen Wert von beispielsweise 75 Ω hat. Um einen optimalen Wirkungsgrad der Senderendstufe 14 zu erreichen, muß der Eingangswiderstand Z_{Ant} an eine geforderte Last Z_{PA} des Leistungsverstärkers 15 angepaßt werden. Für große Sendeleistungen (um 2W) muß eine Last Z_{PA} für den Leisutngsverstärker 15 von etwa 1-2 Ω eingestellt werden, während bei einer kleineren geforderten Sendeleistung eine hochohmigere Last benötigt wird. Daher transformiert das Impedanzanpassungsnetzwerk 16 den Eingangswiderstand Z_{Ant} der Antenne 1 um den Transformationsfaktor T·Z_{Ant}=Z_{PA} auf den Ausgang des Leistungsverstärkers 15.

Der Leistungsverstärker 15 wird von einer nicht dargestellten Batterie mit einer Betriebsspannung U_{B} versorgt. Am Ausgang liefert er eine Ausgangsspannung U_{A}, die an der jeweiligen Last Z_{PA} anliegt. Bei einem Mobilfunkgerät nach dem GSM-Standard sind zahlreiche, einzustellende Pegel für die Sendeleistung festgelegt. Die Ausgangsleistung P_{PA} des Leistungsverstärkers 15, die am Realteil der Last Z_{PA} wirksam ist, d.h. als Sendeleistung abgestrahlt wird, wird daher immer auf einen exakten Wert geregelt. Nach P_{PA} = 1/2·U_{A}²/Z_{PA} bleibt damit bei konstanter Last Z_{PA} die Ausgangsspannung U_{A} ebenfalls konstant. Dadurch kann sich nach Z_{PA}=U_{A}/I_{A} auch der Ausgangsstrom I_{A} nicht verändern, wodurch sich häufig ein überhöhter Stromverbrauch ergibt. Die Last Z_{PA}, d.h. auch der zugehörige der Transformationsfaktor T, wird für einen bestimmten Arbeitspunkt der Ausgangsspannung U_{A} gewählt. Bei einer Betriebsspannung von U_{B} ergibt sich gemäß η=P_{PA}/P_{Gesamt} ein Wirkungsgrad η (typisch η>40%) für den Leistungsverstärker 15. Dieser Wirkungsgrad verschlechtert sich, sobald die Betriebsspannung U_{B} gegenüber dem eingestellten Arbeitspunkt, z.B. gemäß der typischen Entladekurve der verwendeten Batterie, erhöht ist. Um den Wirkungsgrad für unterschiedliche Arbeitspunkte der Betriebsspannung U_{B} zu optimieren, kann der Transformationsfaktor T und damit die Last Z_{PA} des Leistungsverstärkers 15 zwischen zwei Werten umgeschaltet werden. Dies wird anhand der Figur 3 beschrieben.

Das Impedanzanpassungsnetzwerk 16 ist in der Figur 3 ausführlicher dargestellt. Ein als λ/4-Wellenleiter ausgeführter erster Impedanztransformator 17 ist einerseits mit dem Ausgang des Leistungsverstärkers 15 und andererseits mit dem Eingang der Antenne 1 verbunden. Dieser λ/4-Wellenleiter 17 ist so bemessen, daß er bei der verwendeten Sendefrequenz die Impedanz Z_{W}= √(Z_{Ant}·Z_{PA}) besitzt, um die angeschlossenen Last Z_{Ant} an die geforderte Lastimpedanz Z_{PA} des Leistungsverstärkers 15 anzupassen. Der Wert ergibt sich aus der Gleichung für einen λ/4-Transformator, wonach für die Eingangsimpedanz Z_{EIN} eines λ/4-Wellenleiters in Abhängigkeit von der Leitungsimpedanz Z_{W} und der Impedanz am Ausgang Z_{AUS} gilt: Z_{EIN}=Z_{W²}/Z_{AUS}. Durch geeignete Wahl der Parameter für den λ/4-Wellenleiter 17 kann eine entsprechende Impedanz Z_{W} und damit ein Transformationsfaktor T=Z_{PA}/Z_{Ant}=(Z_{W}/Z_{Ant})² eingestellt werden. Dabei kann der λ/4-Wellenleiter 17 als Stripline, Koaxialkabel oder durch ein LC-Netzwerk realisiert werden, das einen solchen λ/4-Wellenleiter nachbildet. Die Impedanz kann mittels der geometrischen Abmessungen und der Materialkonstanten eingestellt werden. Der Wellenleiter kann auch durch eine Leitungsnachbildung mit diskreten Bauelementen nachgebildet werden. Die Leitungsnachbildung kann dabei sowohl induktive (L) als auch kapazitive (C) Elemente enthalten, die den jeweiligen Leitungsbelägen (L'=L/mm bzw. C'=C/mm) des nachzubildenden Wellenleiters entsprechen. Bei allen möglichen Realisierungen kann die wirksame Länge des Wellenleiters an die verwendete Sendefrequenz angepaßt werden.

Ein zweiter Impedanztransformator 18 wird ebenfalls durch einen λ/4-Wellenleiter realisiert, der am Leistungsverstärker 15 zum ersten λ/4-Wellenleiter 17 parallel geschaltet ist. Am anderen Ende ist der zweite λ/4-Wellenleiter 18 mit einem Schalter 19 verbunden, der in einer ersten Schalterstellung an einem Masseanschluß und in einer zweiter Schalterstellung an der Antenne 1 anliegt. Der Kurzschluß am Ende in der ersten Schalterstellung wird durch den λ/4-Wellenleiter 18 auf einen Leerlauf am Anfang transformiert. Damit ist der zweite λ/4-Wellenleiter 18 in dieser Schalterstellung unwirksam. Dagegen entsteht in der zweiten Schalterstellung aufgrund der parallel geschalteten λ/4-Wellenleiter 17 und 18 ein neuer λ/4-Wellenleiter. Die Impedanz des neuen λ/4-Wellenleiters ergibt sich aus der Parallelschaltung der Impedanzen der λ/4-Wellenleiter 17 und 18 zu Z_{w}=(Z₁₈·Z₁₇)/(Z₁₇+Z₁₈). Damit verändert sich auch der Transformationsfaktor T des Impedanzanpassungsnetzwerk 16.

Auf diese Weise lassen sich überraschend einfach zwei unterschiedliche Transformationsfaktoren und damit eine Anpassung des Leistungsverstärkers 15 an die Antenne 1 in zwei verschiedenen Arbeitspunkten realisieren. Durch die antennenseitige Anordnung des Schalters 19 wird die Umschaltung an einer hochohmigen Stelle durchgeführt. Die kleine Lastimpedanz Z_{PA} des Leistungsverstärkers 15 von etwa 1-2 Ohm ist hochtransformiert, wodurch der Schalter 19 mit einem kleinen Strom belastet ist. Daher ist eine Dimensionierung des Schalters für den maximalen Sendestrom nicht erforderlich, und es entstehen nur geringe Verluste im Schalter 19.

Für den Schalter 19 können bistabile mechanische Relais oder gebräuchliche, mit PIN-Dioden realisierte Hochfrequenzschalter eingesetzt werden. Zumeist wird die Anpassung der Senderendstufe 14 an die Antenne 1 in zwei Transformationsstufen vorgenommen, von denen die erste Stufe innerhalb der Senderendstufe 14 enthalten ist. Dadurch muß ein erfindungsgemäßes Impedanzanpassungsnetzwerk 16 nicht von Z_{PA} = 1 Ω auf Z_{Ant} = 75 Ω umsetzen.

Beispielsweise werden zwei Streifenleiter als λ/4-Wellenleiter 17 und 18 verwendet. Der breite Streifenleiter 17 hat einen Wellenwiderstand von Z₁₇=53 Ω und der schmale Streifenleiter 18 von Z₁₈= 128 Ω. Bei einer Antenneneingangsimpedanz von Z_{Ant}=75 Ω ergibt sich in der ersten Schalterstellung eine Transformation auf einen Wert von 37,5 Ω. Diese Transformation wird durch eine weitere Stufe ergänzt, die in der Senderendstufe 14 enthalten ist und einen Übersetzungsfaktor von n²=17 realisiert. Diese zusätzliche Transformation entsteht durch integrierte Übersetzer sowie auch durch vorhandene parasitäre Induktivitäten und Kapazitäten. Damit ergibt sich eine Last von Z_{PA}=2,2 Ω für die erste Schalterstellung. Bei parallelgeschaltetem zweiten λ/4-Wellenleiter 18 wird die wirksame Impedanz des neuen λ/4-Wellenleiters zu Z_{w}=(Z₁₈·Z₁₇)/(Z₁₇+Z₁₈)=37,5 Ω, so daß das Impedanzanpassungsnetzwerk 16 um den Faktor T=0,25 auf 18,8 Ω transformiert. Mittels der zusätzlichen Übersetzung in der Senderendstufe 14 ergibt sich eine Last von Z_{PA}=1,1 Ω. Durch Umschalten des Schalters 19 verändert sich die Last, so daß der Ausgangsstrom I_{A} des Leistungsverstärkers 15 bei konstanter Ausgangsspannung U_{A} reduziert wird. Damit wird der Stromverbrauch der Senderendstufe 14, z.B. bei erhöhter Betriebsspannung U_{B} von einer Batterie, trotz konstant geregelter Ausgangsleistung gesenkt. Ein Abfallen des Wirkungsgrades von η>40% auf einen Wert um 30% durch die Fehlanpassung kann so verhindert werden. Weiterhin wird durch das Umschalten der Last lediglich die ohmsche Last verändert, während auf die Sendefrequenz eingestellte Schwingkreise nicht in ihrer Resonanzfrequenz verstimmt werden.

## Patentansprüche

1. Mobilfunkgerät mit wenigstens einer Senderendstufe (14), mit wenigstens einer Antenne (1) und mit wenigstens einem zwischen Senderendstufe (14) und Antenne (1) angeordneten Impedanzanpassungsnetzwerk (16) mit einem Transformationsfaktor (T) zur Anpassung einer Senderlastimpedanz (Z_{PA}) an eine Antenneneingangsimpedanz (Z_{Ant}),
**dadurch gekennzeichnet,**
**daß** im Impedanzanpassungsnetzwerk (16) wenigstens zwei Impedanztransformatoren (17, 18) durch wahlweise Parallelschaltung, bei der jeweils die Eingänge und die Ausgänge der Impedanztransformatoren parallel geschaltet sind, zur Bildung von wenigstens zwei Transformationsfaktoren vorgesehen sind.

2. Mobilfunkgerät nach Anspruch 1,
**dadurch gekennzeichnet,**
**daß** wenigstens zwei λ/4-Wellenleiter (17, 18) zur Bildung der Impedanztransformatoren (17, 18) vorgesehen sind.

3. Mobilfunkgerät nach Anspruch 2,
**dadurch gekennzeichnet,**
**daß** im Impedanzanpassungsnetzwerk (16)
- ein erster λ/4-Wellenleiter (17) einerseits zur Kopplung mit dem Ausgang der Senderendstufe (15) und andererseits mit dem Eingang der Antenne (1) und
- ein zweiter λ/4-Wellenleiter (18) einerseits zur Kopplung mit dem Ausgang der Senderendstufe (15) und andererseits mit wenigstens einem Schalter (19), der in einer ersten Schalterstellung die Verbindung mit einem Masseanschluß und in einer zweiten Schalterstellung mit dem Eingang der Antenne (1) herstellt, vorgesehen ist.

4. Mobilfunkgerät nach Anspruch 3,
**dadurch gekennzeichnet,**
**daß** ein mit PIN-Dioden realisierter Hochfrequenzschalter zur Bildung des Schalters (19) vorgesehen ist.

5. Mobilfunkgerät nach Anspruch 3,
**dadurch gekennzeichnet,**
**daß** ein bistabiles mechanisches Relais zur Bildung des Schalters (19) vorgesehen ist.

6. Sender mit wenigstens einer Senderendstufe (14), mit wenigstens einer Antenne (1) und mit wenigstens einem zwischen Senderendstufe (14) und Antenne (1) angeordneten Impedanzanpassungsnetzwerk (16) mit einem Transformationsfaktor (T) zur Anpassung einer Senderlastimpedanz (Z_{PA}) an eine Antenneneingangsimpedanz (Z_{Ant}),
**dadurch gekennzeichnet,**
**daß** im Impedanzanpassungsnetzwerk (16) wenigstens zwei Impedanztransformatoren (17, 18) durch wahlweise Parallelschaltung zur Bildung von wenigstens zwei Transformationsfaktoren vorgesehen sind.

## Claims

1. A mobile radio telephone comprising at least a transmitter output stage (14), at least an antenna (1) and at least an impedance matching network (16) inserted between the transmitter output stage (14) and antenna (1) which impedance matching network has a transformation factor (T) for adjusting a transmitter load impedance (Z_{PA}) to match with an antenna input impedance (Z_{Ant}), **characterized in that** at least two impedance transformers (17, 18) in the impedance matching network (16) are provided to form at least two transformation factors by alternative parallel connection of the at least two transformers, in which the respective inputs and outputs of the impedance transformers are connected in parallel.

2. A mobile radio telephone as claimed in claim 1, **characterized in that** at least two λ/4 waveguides (17, 18) are provided to form the impedance transformers (17, 18).

3. A mobile radio telephone as claimed in claim 2, **characterized in that** the impedance matching network (16) comprises
- a first λ/4 waveguide (17) to be coupled, on the one hand, to the output of the transmitter output stage ( 15) and, on the other hand, to the input of the antenna (1) and
- a second λ/4 waveguide (18) to be coupled, on the one hand, to the output of the transmitter output stage (15) and, on the other hand, to at least one switch (19) which establishes in a first switch position the connection to a ground terminal and in a second switch position to the input of the antenna (1).

4. A mobile radio telephone as claimed in claim 3, **characterized in that** a highfrequency switch realized by PIN diodes is used for forming the switch (19).

5. A mobile radio telephone as claimed in claim 3, **characterized in that** a bistable mechanical relay forms the switch (19).

6. A transmitter comprising at least a transmitter output stage (14), at least an antenna (1) and at least an impedance matching network (16) arranged between the transmitter output stage (14) and the antenna (1), the impedance matching network (16) having a transformation factor (T) for adjusting a transmitter load impedance (Z_{PA}) to match with an antenna input impedance (Z_{Ant}), **characterized in that** at least two impedance transformers (17, 18) in the impedance matching network (16) form at least two transformation factors by alternatively connecting them in parallel.

## Revendications

1. Radioémetteur-récepteur mobile avec au moins un étage terminal de l'émetteur (14), avec au moins une antenne (1) et avec au moins un réseau d'adaptation de l'impédance (16) disposé entre l'étage terminal de l'émetteur (14) et l'antenne (1) avec un facteur de transformation (T) pour l'adaptation d'un impédance de charge de l'émetteur (Z_{PA}) à une impédance d'entrée d'antenne (Eₐₙₜ),
**caractérisé en ce**
**que**, dans le réseau d'adaptation de l'impédance (16), au moins deux transformateurs d'impédance (17, 18) sont prévus par montage parallèle au choix dans lequel les entrées et sorties des transformateurs d'impédance sont respectivement montées en parallèle pour la formation d'au moins deux facteurs de transformation.

2. Radioémetteur-récepteur mobile selon la revendication 1,
**caractérisé en ce**
**qu'**au moins deux guides d'ondes λ/4 (17,18) sont prévus pour la formation des transformateurs d'impédance (17, 18).

3. Radioémetteur-récepteur mobile selon la revendication 2,
**caractérisé en ce**
**qu'**il est prévu dans le réseau d'adaptation de l'impédance (16)
un premier guide d'ondes λ/4 (17) pour le couplage, d'une part, avec la sortie de l'étage terminal de l'émetteur (15) et, d'autre part, avec l'entrée de l'antenne (1) et
un deuxième guide d'ondes λ/4 (18) pour le couplage, d'une part, avec la sortie de l'étage terminal de l'émetteur (15) et, d'autre part, avec au moins un commutateur (19) qui, dans une première position de commutateur, établit la liaison avec une borne de masse et, dans une deuxième position de commutateur, la liaison avec l'entrée de l'antenne (1).

4. Radioémetteur-récepteur selon la revendication 3,
**caractérisé en ce**
**qu'**un commutateur à haute fréquence réalisé avec des diodes PIN est prévu pour la formation du commutateur (19).

5. Radioémetteur-récepteur selon la revendication 3,
**caractérisé en ce**
**qu'**un relais mécanique bistable est prévu pour la formation du commutateur (19).

6. Emetteur avec au moins un étage terminal de l'émetteur (14), avec au moins une antenne (1) et avec au moins un réseau d'adaptation de l'impédance (16) disposé entre l'étage terminal de l'émetteur (14) et l'antenne (1) avec un facteur de transformation (T) pour l'adaptation d'une impédance de charge de l'émetteur (Z_{PA}) à une impédance d'entrée de l'antenne (Zₐₙₜ),
**caractérisé en ce**
**qu'**au moins deux transformateurs d'impédance (17, 18) sont prévus dans le réseau d'adaptation de l'impédance (16) par montage parallèle au choix pour la formation d'au moins deux facteurs de transformation.
